# EUROPÄISCHE PATENTSCHRIFT

(11) **EP 2 505 970 B1**
(45) Veröffentlichungstag und Bekanntmachung des Hinweises auf die Patenterteilung: **12.03.2014**
(21) Anmeldenummer: 11160723.0
(22) Anmeldetag: 31.03.2011
(51) Int. Cl.: G01F 1/684, G01F 1/692, G01P 5/12

(54) **Kalorimetrischer Sensor**
Calorimetric sensor
Capteur calorimétrique

(43) Veröffentlichungstag der Anmeldung: 03.10.2012
(73) Patentinhaber: JUMO GmbH & Co. KG, 36039 Fulda (DE)
(72) Erfinder: Wolf, Andreas, 63840 Hausen (DE)
(74) Vertreter: Schwabe - Sandmair - Marx

(56) Entgegenhaltungen:
- EP-A1- 1 124 114
- EP-A2- 1 703 263
- JP-A- 2000 146 656
- JP-A- 2001 153 707
- JP-A- 2008 224 354
- US-A- 5 056 362

## Beschreibung

Die Erfindung betrifft einen kalorimetrischen Sensor, der insbesondere zur Messung einer Strömungsgeschwindigkeit oder als Flusssensor zur Messung eines Massen- oder Volumenstroms eines fluiden Mediums verwendet werden kann.

Kalorimetrische Sensoren mit beheizbaren Heizwiderständen werden in unterschiedlichen Bauformen zur Messung der Strömungsgeschwindigkeit oder Durchflussrate von fluiden, d.h. gasförmigen oder flüssigen Medien eingesetzt. Zur Messung wird der Effekt genutzt, dass einem beheizten Körper, dem Heizwiderstand, durch ein ihn umströmendes Medium in Abhängigkeit von der Durchflussrate Wärmeenergie entzogen wird. Nimmt die Durchflussrate zu, wird pro Zeiteinheit auch mehr Wärmeenergie entzogen. Die konstruktive Anordnung und elektrische Verschaltung der Sensoren sowie die Signalauswertung können sehr unterschiedlich sein. So kann die Beheizung des Sensors indirekt durch einen separaten Heizwiderstand erfolgen, oder die Heizleistung wird direkt über die elektrische Versorgung des Sensors, einen integrierten Heizwiderstand, eingebracht.

Häufig wird die Temperaturdifferenz zu einem zweiten, unbeheizten Temperatursensor ausgewertet, der dazu meist in einer Wheatstone'schen Messbrücke geeignet verschaltet ist. Etabliert haben sich vor allem zwei Prinzipien. Zum einen die Konstant-Strom-Methode (CCA Constant Current Anemometry) und zum anderen die Konstant-Temperaturdifferenz-Methode (CTA Constant Temperature Anemometry). Bei der Konstant-Strom-Methode wird der Strom durch die Temperatursensoren konstant gehalten und die sich einstellende Temperaturdifferenz ausgewertet, wobei die Temperatursensoren vorzugsweise mit unterschiedlicher Stromstärke beaufschlagt werden. Bei der Konstant-Temperaturdifferenz-Methode wird die Temperaturdifferenz konstant gehalten, indem über eine Regelung der Heizwiderstand variabel beheizt und die benötigte Heizleistung als Messsignal ausgewertet wird. In all diesen Ausführungen werden temperatursensitive Widerstände als Sensoren benutzt.

Kalorimetrische Flussmessungen werden schon in der US 946,886 B, der US 1,222,492 B und der GB 18,563 B beschrieben. Nach der US 1,222,492 B werden in Strömungsrichtung eines Messmediums hintereinander ein temperaturabhängiger Messwiderstand, ein Heizwiderstand und ein weiterer temperaturabhängiger Messwiderstand angeordnet und in einer Wheatstone'schen Messbrücke verschaltet, um die Flussrate nach der Konstant-Strom-Methode oder der Konstant-Temperaturdifferenz-Methode zu bestimmen.

Aus der US 3,335,606 B ist ein kalorimetrischer Sensor mit zwei in Strömungsrichtung des Mediums hintereinander angeordneten temperaturabhängigen Widerständen bekannt, von denen einer mittels einer Spule beheizt wird. Die Spule wird entsprechend der KonstantTemperatur-Methode mit elektrischer Energie versorgt.

Für die Messung der Strömungsgeschwindigkeit in Gasen hat sich eine beispielsweise aus der US 4,478,077 B bekannte Anordnung bewährt, bei der auf einem gemeinsamen Substrat in Strömungsrichtung hintereinander drei Widerstände in Dünnschichttechnik angeordnet sind. Die beiden äußeren Widerstände dienen als Temperatursensoren und der mittlere als Heizer. Die Anordnung wird ohne besondere Umhüllung direkt in das strömende Gas eingesetzt.

Zur Messung der Strömungsgeschwindigkeit in Flüssigkeiten werden die Temperatursensoren meist in Schutzrohre eingebaut. Die Schutzrohre stellen einen Wärmeübergangswiderstand dar, der die Messgenauigkeit und die Ansprechzeit verschlechtert. Zudem kann es notwendig sein, dass die Anordnung zur Strömungsrichtung ausgerichtet werden muss. Häufig werden handelsübliche Temperatursensoren in Standardbauformen verwendet. Wenn man diese indirekt beheizt, führt der notwendige Abstand zwischen Temperatursensor und Heizer zu ungünstigen messtechnischen Eigenschaften. Es existieren deshalb Vorschläge, Heizer und Temperatursensoren geeignet auf einem gemeinsamen Substrat anzuordnen,

In der EP 1 048 935 A2 wird ein Sensor vorgeschlagen, bei dem auf einem gemeinsamen Substrat je ein Heizwiderstand und ein Temperaturmesswiderstand parallel und mäanderförmig geschachtelt aufgebracht sind. In dieser Anordnung besteht wie bei den vorstehend erläuterten anderen Sensoren ebenfalls eine Richtungsabhängigkeit des Messsignals. Es ist deshalb eine komplexe Ansteuerung und Auswertung notwendig, um die Richtungsabhängigkeit durch entsprechende Rechenoperationen zu kompensieren.

Die DE 10 2005 015 692 A1 offenbart eine Anordnung von in einer Draufsicht gesehen kreisringförmigen, zueinander konzentrisch angeordneten Temperatursensoren. In angrenzenden Bereichen der ringförmigen Temperatursensoren können diese eine zackenförmige, verzahnte Struktur bilden. Einer der Temperatursensoren ist thermisch an eine Heizeinheit gekoppelt, die von dem Messmedium weitgehend entkoppelt ist. Die Heizeinheit kann entfernt von den Temperatursensoren angeordnet und in geeigneter Weise thermisch mit dem beheizbaren Temperatursensor gekoppelt sein. In einer anderen Ausführung sind die Temperatursensoren auf unterschiedlichen Ebenen eines Substrats angeordnet, wobei beide Temperatursensoren beheizbar ausgestaltet sein können und eine Regel- und Auswerteeinheit die Temperatursensoren alternierend als aktive oder passive Temperatursensoren ansteuern kann. Durch die im Wesentlichen rotationssymmetrische Anordnung der Temperatursensoren wird zwar eine relativ zur Strömungsrichtung des Mediums unabhängige Einbaulage gewährleistet, allerdings ist der Herstellprozess in Dünnschichttechnik auf einem scheibenförmigen Substrat aufwändig. Nachteilig ist auch die thermische Entkopplung von Heizeinheit oder direkt beheiztem Temperatursensor und Messmedium.

Aus der US 5,965,812 B ist ein Flusssensor bekannt, der auf einem Substrat eine ringförmige innere Widerstandsbahn und konzentrisch hierzu eine umgebende ringförmige äußere Widerstandsbahn aufweist. Die innere Widerstandsbahn, wird als Heizwiderstand betrieben. In einer weiteren Ausführungsform sind die ringförmig runden Widerstandsbahnen jeweils durch eine in Zickzackform kreisförmig geführte Widerstandsbahn ersetzt. Die Messanordnung ist so gewählt, dass der Sensor zentrisch angeströmt wird und das Messmedium aus dem Zentrum nach außen zunächst über den Heizwiderstand und anschließend über den peripheren Messwiderstand abströmt. Auch für diese Sensoren gilt, dass der Herstellprozess in Dünnschichttechnik aufwändig ist.

Die konzentrische Anordnung mit innerem Heizwiderstand und peripherem Messwiderstand wird in der US 5,965,812 B speziell für die zentrale Anströmung gewählt. In Anordnungen, in denen das Medium die mit den Widerstandsbahnen versehene Messfläche nicht zentral orthogonal, sondern parallel zur Messfläche anströmt, würde mehr als eine Hemisphäre des Messwiderstands vom unbeheizten Medium und nur ein entsprechend geringer Flächenanteil des Messwiderstands vom beheizten Medium beströmt werden. Es fände, wie im Übrigen auch bei den Sensoren der DE 10 2005 015 692 A1, den Flächenanteilen entsprechend eine Mittelung statt, der Messwiderstand würde dem Verhältnis des warmen zum kalten Bahnbereichs entsprechend einen mittleren Widerstandswert annehmen. Würde in den Messanordnungen der DE 10 2005 015 692 A1 der periphere Temperatursensor direkt oder indirekt beheizt werden, ginge der überwiegende Teil der Heizleistung verloren, da das erwärmte Medium den in diesem Fall inneren Messwiderstand gar nicht überströmt.

Bei einem aus der US 5 056 362 A bekannten Sensor verläuft eine Widerstandsbahn eines Temperaturmesswiderstands in mehreren Schleifen in einem zentralen Flächenbereich, den eine in mehreren Schleifen um den zentralen Flächenbereich verlaufende Widerstandsbahn eines Heizwiderstands umgibt.

Die JP 2001153707 A offenbart einen Sensor mit einem Heizwiderstand, den eine in Schleifen mäanderförmig verlaufende Widerstandsbahn bildet, und einem Temperaturmesswiderstand stromaufwärts vom Heizwiderstand sowie einem Temperaturmesswiderstand stromabwärts vom Heizwiderstand, die jeweils von einer eine Schleife bildenden Widerstandsbahn gebildet werden. Die Schleifen der Heizwiderstandsbahn sind zwischen den beiden Schleifen der Temperaturmesswiderstände angeordnet.

Ein aus der EP 1 124 114 A1 bekannter Sensor weist eine Widerstandsbahn eines Heizwiderstands, einen stromauf vom Heizwiderstand angeordneten ersten Temperaturmesswiderstand und einen stromab vom Heizwiderstand angeordneten zweiten Temperaturmesswiderstand auf. Die Temperaturmesswiderstände werden jeweils von einer kammförmig geformten Widerstandsbahn gebildet, wobei sich die von den Schleifen der jeweiligen Widerstandsbahn geformten Zacken parallel zur Strömungsrichtung des Messmediums erstrecken.

Es ist eine Aufgabe der Erfindung, einen kalorimetrischen Sensor zu schaffen, der zum richtungsunabhängigen Messen der Flussrate wie etwa eines Massen- oder Volumenstroms oder der Strömungsgeschwindigkeit eines fluiden Messmediums geeignet ist und eine hohe Temperaturempfindlichkeit und Auflösung aufweist.

Die Erfindung geht von einem kalorimetrischen Sensor aus, der auf einem Substrat eine in Schleifen verlaufende erste Widerstandsbahn und eine ebenfalls in Schleifen verlaufende zweite Widerstandsbahn aufweist. Die eine der Widerstandsbahnen bildet einen Heizwiderstand und die andere einen Temperaturmesswiderstand. Die Widerstandsbahnen sind jeweils aus einem temperaturabhängigen Widerstandsmaterial gebildet. Das Widerstandsmaterial der ersten Bahn kann ein anderes als das Widerstandsmaterial der zweiten Bahn sein. In bevorzugten Ausführungen sind die Widerstände jedoch aus dem gleichen Widerstandsmaterial gebildet.

Die Widerstandsbahnen bilden in einer Draufsicht gesehen gemeinsam eine Bahnstruktur mit einer zentralen Achse, die zur Richtung der Draufsicht parallel ist und somit orthogonal zu einer Substratfläche weist, auf der wenigstens eine der Widerstandsbahnen, vorzugsweise beide Widerstandsbahnen, angeordnet ist oder sind. Die Widerstandsbahnen sind in der Draufsicht verzweigt oder verschachtelt, sie bilden entsprechend eine verzweigte oder verschachtelte Bahnstruktur.

Schleifen der ersten Widerstandsbahn erstrecken sich in der Draufsicht gesehen in unterschiedliche, nicht parallele Richtungen jeweils quer zur zentralen Achse und zwischen Schleifen der zweiten Widerstandsbahn oder in Schleifen der zweiten Widerstandsbahn hinein. Hierbei können sich sämtliche Schleifen der ersten Widerstandsbahn in zueinander unterschiedliche, nicht parallele Richtungen quer zur zentralen Achse erstrecken. Aus der Gesamtheit der Schleifen der ersten Widerstandsbahn können aber auch mehrere zueinander parallel erstreckt sein, solange die erste Widerstandsbahn auch in nicht parallele Querrichtungen erstreckte Schleifen umfasst.

Es können insbesondere sämtliche Schleifen der ersten Widerstandsbahn zwischen Schleifen der zweiten Widerstandsbahn oder in Schleifen der zweiten Widerstandsbahn hinein erstreckt sein. Das Wort "oder" wird hier wie auch stets sonst von der Erfindung im üblichen logischen Sinne von "inklusiv oder" verstanden, umfasst also sowohl die Bedeutung von "entweder ... oder" als auch die Bedeutung von "und", soweit sich aus dem jeweils konkreten Zusammenhang nicht ausschließlich nur eine dieser Bedeutungen ergeben kann. Bezogen auf das Erstrecktsein zwischen oder in Schleifen der zweiten Widerstandsbahn bedeutet dies, dass in ersten Varianten alle Schleifen der ersten Widerstandsbahn jeweils nur zwischen Schleifen der zweiten Widerstandsbahn erstreckt sind. In zweiten Varianten können alle Schleifen der ersten Widerstandsbahn jeweils in Schleifen der zweiten Widerstandsbahn hinein erstreckt sein. In dritten Varianten können mehrere der Schleifen der ersten Widerstandsbahn nur zwischen Schleifen der zweiten Widerstandsbahn und die anderen Schleifen der ersten Widerstandsbahn in Schleifen der zweiten Widerstandsbahn hinein erstreckt sein. Umfasst sind auch Ausführungen, in denen nur eine einzige oder mehrere oder alle der Schleifen der ersten Widerstandsbahn sowohl zwischen Schleifen der zweiten Widerstandsbahn als auch in eine oder mehrere Schleifen der zweiten Widerstandsbahn hinein erstreckt sind. Es müssen nicht unumgänglich alle Schleifen der ersten Widerstandsbahn zwischen Schleifen der zweiten Widerstandsbahn oder in Schleifen der zweiten Widerstandsbahn hinein erstreckt sein. Die Erfindung umfasst auch Ausführungen, in denen ein Teil aus der Gesamtheit aller Schleifen der ersten Widerstandsbahn weder zwischen noch in Schleifen der zweiten Widerstandsbahn verläuft. Allerdings ist es vorteilhaft, wenn wenigstens die überwiegende Zahl der Schleifen der ersten Widerstandsbahn zwischen Schleifen der zweiten Widerstandsbahn oder in Schleifen der zweiten Widerstandsbahn hinein erstreckt ist.

Nach der Erfindung existiert zu jeder zur zentralen Achse radialen Richtung eine in die jeweilige Richtung erstreckte oder zu der jeweiligen Richtung parallel beabstandete Achse, längs der auf mehrere in der jeweiligen radialen Richtung voneinander beabstandete Bahnoder Schleifenabschnitte der ersten Widerstandsbahn jeweils ein oder mehrere Bahn- oder Schleifenabschnitt(e) der zweiten Widerstandsbahn folgt oder folgen. Das Medium passiert entsprechend ungeachtet der Drehwinkelposition, die die Bahnstruktur in Bezug auf die zentrale Achse relativ zur Strömungsrichtung des Mediums einnimmt, in alternierender Abfolge mehrmals hintereinander jeweils wenigstens einen Bahn- oder Schleifenabschnitt der ersten Widerstandsbahn und jeweils wenigstens einen Bahn- oder Schleifenabschnitt der zweiten Widerstandsbahn. Das Medium passiert somit wenigstens zwei in Strömungsrichtung hintereinander angeordnete Bahn- oder Schleifenabschnitte der ersten Widerstandsbahn und wenigstens zwei hintereinander angeordnete Bahn- oder Schleifenabschnitte der zweiten Widerstandsbahn, von denen wenigstens einer zwischen den wenigstens den zwei Bahn- oder Schleifenabschnitten der ersten Widerstandsbahn und wenigstens ein anderer in Strömungsrichtung hinter den wenigstens zwei Bahn- oder Schleifenabschnitten der ersten Widerstandsbahn liegt.

Im Ergebnis wird in der Draufsicht gesehen eine Bahnstruktur in Form eines Flächenmusters erhalten, in dem die erste Widerstandsbahn zwar räumlich und elektrisch von der zweiten Widerstandsbahn separiert verläuft, die Widerstandsbahnen aber die Fläche der Bahnstruktur mit einem hohen Flächendeckungsgrad und vorzugsweise gleichmäßiger Flächenbelegung ausfüllen und zudem in unterschiedlichen Richtungen, die jeweils quer zur zentralen Achse weisen, ineinander verwoben sind. Der Flächendeckungsgrad beträgt in bevorzugten Ausführungen wenigstens 40 %.

Die erfindungsgemäß ineinander verzweigte oder mehrfach geschachtelte Bahnstruktur ist weitgehend unabhängig von der Strömungsrichtung des Messmediums, dessen Massen- oder Volumenstrom oder Strömungsgeschwindigkeit oder andere, kalorimetrisch bestimmbare(n) Eigenschaft(en) ermittelt werden soll oder sollen. Gleichzeitig wird die durch den Heizwiderstand in das Messmedium eingetragene Wärmemenge zu einem größeren Teil als bei den bekannten Bahnstrukturen mit einer inneren und einer hierzu konzentrischen peripheren Widerstandsbahn auf den Temperaturmesswiderstand übertragen. Die einzutragende Wärmemenge kann verringert und die Temperaturempfindlichkeit und Auflösung des Sensors können erhöht werden. Der Sensor reagiert auf Änderungen der Strömungsgeschwindigkeit bzw. des Massen- oder Volumenstroms sensibel und mit kurzer Ansprechzeit.

Die Geometrie des Heizwiderstands ist vorteilhafterweise so gewählt, dass die Fläche der Bahnstruktur möglichst gleichmäßig beheizt wird. Der Temperaturmesswiderstand belegt von der Gesamtfläche der Bahnstruktur vorteilhafterweise einen möglichst großen Flächenanteil. Der Verlauf der Widerstandsbahnen ist zweckmäßigerweise in diesem Sinne gestaltet, indem die Widerstandsbahn des Temperaturmesswiderstands einen größeren Anteil an der Gesamtfläche der Bahnstruktur hat und die Widerstandsbahn des Heizwiderstands über die gesamte Fläche der Bahnstruktur jeweils auf eine nur lokale Flächenbelegung begrenzt, aber dennoch gleichmäßig verteilt ist. So entspricht es bevorzugten Ausführungen, wenn die Anzahl der Schleifen der ersten Widerstandsbahn deutlich größer ist als die Anzahl der Schleifen der zweiten Widerstandsbahn, wobei die Anzahl der Schleifen der zweiten Widerstandsbahn vorzugsweise wenigstens zweimal, bevorzugter wenigstens dreimal so groß wie die Anzahl der Schleifen der ersten Widerstandsbahn ist, die Schleifen der ersten Widerstandsbahn sich aber trotz ihrer vergleichsweise geringen Anzahl über die Fläche der Bahnstruktur und in gleichmäßiger Anordnung erstrecken.

In bevorzugten Ausführungen, bildet die erste Widerstandsbahn den Heizwiderstand und die zweite Widerstandsbahn den Messwiderstand.

In bevorzugten Ausführungen verzweigt die erste Widerstandsbahn in Schleifenzweige, die sich in der Draufsicht gesehen aus einem Zentralbereich der Bahnstruktur nach außen in Richtung auf eine Peripherie der Bahnstruktur oder von der Peripherie nach innen in Richtung auf den Zentralbereich erstrecken. Die zweite Widerstandsbahn verläuft in den von den Schleifenzweigen seitlich begrenzten Sektoren oder Feldern. Die zweite Widerstandsbahn kann sich hierbei in Richtung auf die Peripherie oder in Richtung auf den Zentralbereich über die Schleifenzweige der ersten Widerstandsbahn hinaus erstrecken. Günstig ist allerdings, wenn die Bahnen zumindest im Wesentlichen bis zur Peripherie der Bahnstruktur und zumindest im Wesentlichen auch im Zentralbereich ineinander verzweigt sind. Die erste Widerstandsbahn kann wenigstens drei, vorzugsweise mehr als drei Schleifenzweige aufweisen, die sich aus dem Zentralbereich voneinander weg in Richtung auf die Peripherie oder von der Peripherie in Richtung auf den Zentralbereich erstrecken, beispielsweise speichenförmig oder vorzugsweise stern- oder kreuzförmig. Der Zentralbereich kann sich in der Draufsicht gesehen zentral in Bezug auf eine Länge oder eine Breite der Bahnstruktur über die Breite oder Länge der Bahnstruktur erstrecken. Vorzugsweise handelt es sich jedoch um einen Zentralbereich, der ringsum von der verzweigten oder verschachtelten Bahnstruktur umgeben ist. Die Bahnstruktur kann in der Draufsicht im Ganzen gesehen insbesondere quadratisch oder zumindest im Wesentlichen quadratisch oder beispielsweise auch kreisförmig sein, also solch eine Messfläche bilden.

Weist der Sensor eine mehrfach geschachtelte Bahnstruktur auf, können Schleifen der ersten Widerstandsbahn Schleifen der zweiten Widerstandsbahn und auch Schleifen der zweiten Widerstandsbahn Schleifen der ersten Widerstandsbahn umgeben. Die Widerstandsbahnen verlaufen derart ineinander geschachtelt spiralförmig um die zentrale Achse und umeinander aus dem Zentralbereich nach außen zur Peripherie der Bahnstruktur. Die Widerstandsbahnen können miteinander insbesondere eine Doppelspirale bilden. Eine oder beide Widerstandsbahn(en) kann oder können über die gesamte Länge oder nur abschnittsweise einen runden Verlauf, mit beispielsweise sich von innen nach außen kontinuierlich vergrößerndem Krümmungsradius aufweisen, bevorzugter bilden jedoch beide Widerstandsbahnen jeweils einen Polygonzug, sind also aus geraden Bahnabschnitten zusammengesetzt. Die Widerstandsbahnen sollten in einer geschachtelten Bahnstruktur, wenigstens zehnmal, vorzugsweise wenigstens zwanzigmal um die zentrale Achse umlaufen. Je höher die Zahl der Umläufe ist, desto größer ist die Annäherung an eine dreizählige oder vorzugsweise höherzählige Drehsymmetrie oder an eine Rotationssymmetrie. In einer geschachtelten Bahnstruktur, wird jeweils ein über einen Bogenwinkel von etwa 270° erstreckter Bahnabschnitt als eine Schleife der jeweiligen Widerstandsbahn verstanden. Ändert die jeweilige Widerstandsbahn beispielsweise in Abständen von 90° ihre Richtung, bilden jeweils wenigstens zwei parallele Bahnabschnitte mit einem hierzu rechtwinklig erstreckten Verbindungsabschnitt, der die parallelen Bahnabschnitte miteinander verbindet, eine Schleife.

In Ausführungen, in denen die erste Widerstandsbahn in Schleifenzweige verzweigt, können diese Schleifenzweige Hauptzweige der ersten Widerstandsbahn bilden, die ihrerseits wieder in Nebenzweige verzweigen. Vorzugsweise verzweigt jeder der Hauptzweige in mehrere Nebenzweige. Die Hauptzweige erstrecken sich quer zur zentralen Achse in unterschiedliche, nicht parallele Richtungen zwischen Schleifen der zweiten Widerstandsbahn oder in Schleifen der zweiten Widerstandsbahn hinein. Vorzugsweise erstrecken sich auch Nebenzweige, vorzugsweise jeder der Nebenzweige, quer zur zentralen Achse zwischen Schleifen der zweiten Widerstandsbahn oder in Schleifen der zweiten Widerstandsbahn hinein. Bevorzugt weisen auch die Nebenzweige in voneinander unterschiedliche, nicht parallele Querrichtungen. Als Schleifen werden im Sinne der Erfindung sowohl die Haupt- als auch die Nebenzweige verstanden.

Für die Bahnstruktur wird ein vorteilhaftes Flächenmuster erhalten, wenn die erste Widerstandsbahn einen ersten Schleifenzweig aufweist, der sich von ersten Anschlüssen der ersten Widerstandsbahn in den Zentralbereich erstreckt und im Zentralbereich in weitere Schleifenzweige verzweigt, oder die erste Widerstandsbahn sich in einer peripheren Schleife um die zentrale Achse erstreckt und von dieser Peripherieschleife mehrere Schleifenzweige nach innen in Richtung auf den Zentralbereich abzweigen. In beiden Möglichkeiten der Verzweigung, die in der gleichen Bahnstruktur auch gemeinsam verwirklicht sein können, erstreckt sich die zweite Widerstandsbahn von zweiten Anschlüssen ausgehend in die von den Schleifenzweigen begrenzten Sektoren oder Felder. Optional kann sich die zweite Widerstandsbahn zusätzlich auch peripher um die Schleifenzweige der ersten Widerstandsbahn erstrecken.

Die elektrischen Anschlüsse der Widerstandsbahnen können auf unterschiedlichen Substratflächen oder bevorzugt auf der gleichen Substratfläche angeordnet sein. Sind die Anschlüsse, nämlich die ersten Anschlüsse und die zweiten Anschlüsse, auf einer für die Widerstandsbahnen gemeinsamen Messfläche vorgesehen, können die Anschlüsse an der gleichen Seite neben der Bahnstruktur oder gegebenenfalls sogar in einem Innenbereich der Bahnstruktur angeordnet sein. Vorzugsweise ist die Bahnstruktur in sämtlichen Ausführungen jedoch überall dicht mit Bahnabschnitten der Widerstandsbahnen ausgefüllt. In ebenfalls bevorzugten Ausführungen ist ein Paar der Anschlüsse an einer Seite neben der Bahnstruktur und ein anderes Paar der Anschlüsse an einer anderen Seite neben der Bahnstruktur, vorzugsweise jeweils in großer räumlicher Nähe zur Bahnstruktur, angeordnet. Die Anschlusspaare können einander insbesondere über den Zentralbereich der Bahnstruktur gegenüberliegend angeordnet sein.

Die Bahnstruktur ist in Bezug auf die zentrale Achse zumindest im Wesentlichen drehsymmetrisch, was auch den Fall einer Rotationssymmetrie einschließen soll. Sie kann in Bezug auf die zentrale Achse eine dreizählige Drehsymmetrie aufweisen. Bevorzugt weist sie eine höherzählige, n-zählige Drehsymmetrie mit n > 3 auf. Dies bedeutet, dass sie durch Drehung um jeweils 360⁰/n in sich selbst überführt wird, wobei n eine natürliche Zahl ist. Sie kann insbesondere eine vierzählige Drehsymmetrie aufweisen. Die Bahnstruktur kann grundsätzlich auch eine noch höherzählige Drehsymmetrie aufweisen, bis nahe zu einer Rotationssymmetrie. Eine im mathematischen Sinne vollständige Drehsymmetrie, eine Rotationssymmetrie, in der die Widerstandsbahnen in Kreisen verlaufen, liegt jedoch nicht exakt vor, vielmehr handelt es sich dann nur um eine angenäherte Rotationssymmetrie, da die Widerstandsbahnen in derartigen Ausführungen beispielsweise jeweils spiralförmig mit sich kontinuierlich änderndem Krümmungsradius oder diskontinuierlich änderndem Abstand von der zentralen Achse in einer Vielzahl von Umläufen um die zentrale Achse umlaufen und einander dabei jeweils wechselseitig umgeben.

Die zweite Widerstandsbahn kann in einer verzweigten Bahnstruktur in den Sektoren oder Feldern, die zwischen Schleifenzweigen der ersten Widerstandsbahn frei bleiben, in Schleifen verlaufen, so dass sie sich um den jeweiligen Schleifenzweig der ersten Widerstandsbahn erstreckt und der betreffende Schleifenzweig in eine oder mehrere Schleife(n) der zweiten Widerstandsbahn hineinragt. Stattdessen oder zusätzlich kann die zweite Widerstandsbahn auch noch in den Sektoren oder Feldern zwischen den Schleifenzweigen in einer oder mehreren Schleifen geführt sein. In einer geschachtelten Bahnstruktur kann die zweite Widerstandsbahn nicht nur um die zentrale Achse umlaufende Schleifen bilden, sondern zusätzlich auch noch in sekundären Schleifen zwischen beispielsweise zwei geraden Bahnabschnitten der ersten Widerstandsbahn verlaufen. Grundsätzlich gilt das für beide Widerstandsbahnen. Vorteilhaft ist bei geschachtelter Bahnstruktur ein Verlauf in um die zentrale Achse erstreckten primären Schleifen und innerhalb der primären Schleifen jeweils mehreren sekundären Schleifen, insbesondere für diejenige Widerstandsbahn, die den Temperaturmesswiderstand bildet.

Die erste und die zweite Widerstandsbahn können der Querschnittsfläche nach gleich sein. Grundsätzlich können sie auch die gleiche Länge aufweisen. In bevorzugten Ausführungen ist jedoch diejenige Widerstandsbahn, die den Temperaturmesswiderstand bildet, länger oder weist einen geringeren Querschnitt als die Widerstandsbahn des Heizwiderstands auf. Die Dicke der Widerstandsbahnen ist vorzugsweise gleich. Entsprechend weist die Widerstandsbahn des Temperaturmesswiderstands vorzugsweise eine geringere Breite als die Widerstandsbahn des Heizwiderstands auf. Noch bevorzugter ist sie schmaler und länger als die Widerstandsbahn des Heizwiderstands. Die Widerstandsbahn des Temperaturmesswiderstands ist vorzugsweise in mehr Schleifen als die Widerstandsbahn des Heizwiderstands geführt. Bevorzugt ist die Zahl ihrer Schleifen wenigstens doppelt so hoch wie die Zahl der Schleifen des Heizwiderstands. Die Widerstandsbahn des Temperaturmesswiderstandes ist vorzugsweise wenigstens doppelt so lang wie die Widerstandsbahn des Heizwiderstands. Ihre Breite ist vorzugsweise höchstens halb so groß wie die Breite der Widerstandsbahn des Heizwiderstands.

Mittels des erflndungsgemäi3en Sensors kann auch exakter als mit den bekannten Sensoren gemessen werden, wie viel Wärme, d.h. welche Wärmemenge, das Medium pro Zeiteinheit vom Heizer abtransportiert bzw. ableitet. Der Sensor eignet sich nicht nur zur Messung bei strömendem Medium, sondern auch für Messungen in stillstehendem Medium, beispielsweise zur Bestimmung der Wärmekapazität oder Wärmeleitfähigkeit des Mediums. Die räumliche Nähe von Heiz- und Temperaturmesswiderstand minimiert den Wärmeableitfehler bei strömendem und auch bei stehendem Medium.

Die Dicke des Substrats ist typischerweise kleiner als 400 µm und kann durchaus sogar kleiner als 100 µm sein, grundsätzlich ist die Erfindung hinsichtlich der Dicke des Substrats jedoch nicht beschränkt.

Das Substrat kann vorteilhafterweise aus Aluminiumoxidkeramik gefertigt sein.

Die Schleifen der Widerstandsbahnen können zwar dem Grunde nach einen runden Verlauf aufweisen, bevorzugter setzen sich die Widerstandsbahnen jedoch aus geraden Bahnabschnitten zusammen. Besonders bevorzugt werden rechteckförmige Schleifen, insbesondere langgestreckte, schlanke Schleifen.

Zwischen benachbarten Bahnabschnitten der Widerstandsbahnen verbleibt vorzugsweise jeweils ein Abstand, der zumindest über den überwiegenden Teil der Länge der Widerstandsbahnen, vorzugsweise über die gesamte Fläche der Bahnstruktur, kleiner als eine Dicke des Substrats ist. Insbesondere für den Temperaturmesswiderstand sind eine große Länge und ein kleiner Querschnitt von Vorteil. Bei somit vorteilhaft geringer Breite können durch Verringerung des Abstands zwischen benachbarten Bahnabschnitten die Länge zur Erzielung eines hohen Nennwiderstandswert und der Flächendeckungsgrad vergrößert werden. Der Abstand zwischen jeweils benachbarten Bahnabschnitten des Temperaturmesswiderstands ist über mehr als den überwiegenden Teil der Länge seiner Widerstandsbahn vorzugsweise jeweils höchstens dreimal, bevorzugter höchstens zweimal so groß wie eine maximale Breite der Widerstandsbahnen des Temperaturmesswiderstands. Der Abstand zwischen jeweils benachbarten Bahnabschnitten des Heizwiderstands ist über mehr als den überwiegenden Teil der Länge seiner Widerstandsbahn vorzugsweise jeweils höchstens dreimal, bevorzugter höchstens zweimal so groß wie eine maximale Breite der Widerstandsbahnen des Heizwiderstands. In bevorzugten Ausführungen ist der Abstand zwischen benachbarten Bahnabschnitten der Widerstandsbahnen zumindest über den überwiegenden Teil der Länge der Widerstandsbahnen, vorzugsweise über wenigstens 80% der Länge der jeweiligen Bahn, kleiner als 50 µm und noch bevorzugter kleiner als 20 µm. Die Abstandskriterien sind vorteilhafterweise über die gesamte oder nahezu die gesamte Länge der jeweiligen Widerstandsbahn erfüllt und Abweichungen, soweit vorhanden, lokal begrenzt und vernachlässigbar. Unter den genannten Bedingungen hinsichtlich der Bahnlängen bzw. der Fläche der Bahnstruktur gilt vorzugsweise wenigstens eines der folgenden Abstandskriterien:
(i) zwischen benachbarten Bahnabschnitten der ersten Widerstandsbahn verbleibt jeweils ein Abstand, der kleiner als eine Dicke des Substrats (1), vorzugsweise kleiner als 50 µm und noch bevorzugter kleiner als 20 µm ist;
(ii) zwischen benachbarten Bahnabschnitten der zweiten Widerstandsbahn verbleibt jeweils ein Abstand, der kleiner als eine Dicke des Substrats, vorzugsweise kleiner als 50 µm und noch bevorzugter kleiner als 20 µm ist;
(iii) zwischen Abschnitten der ersten Widerstandsbahn und diesen Abschnitten benachbarten Abschnitten der zweiten Widerstandsbahn verbleibt jeweils ein Abstand, der kleiner als eine Dicke des Substrats, vorzugsweise kleiner als 50 µm und noch bevorzugter kleiner als 20 µm ist.

Vorteilhafte Merkmale werden auch in den Unteransprüchen und deren Kombinationen beschrieben.

Nachfolgend werden Ausführungsbeispiele der Erfindung anhand von Figuren erläutert. An den Ausführungsbeispielen offenbar werdende Merkmale bilden jeweils einzeln und in jeder Merkmalskombination die Gegenstände der Ansprüche und auch die vorstehend erläuterten Ausgestaltungen vorteilhaft weiter. Es zeigen:
- Figur 1: einen Sensor eines ersten Ausführungsbeispiels mit einer verzweigten Bahnstruktur,
- Figur 2: einen Sensor eines zweiten Ausführungsbeispiels mit einer verzweigten Bahnstruktur,
- Figur 3: einen Sensor eines dritten Ausführungsbeispiels mit einer verzweigten Bahnstruktur,
- Figur 4: einen Sensor eines vierten Ausführungsbeispiels mit einer geschachtelten Bahnstruktur und
- Figur 5: eine Messanordnung mit einem Sensor nach einem der Ausführungsbeispiele.

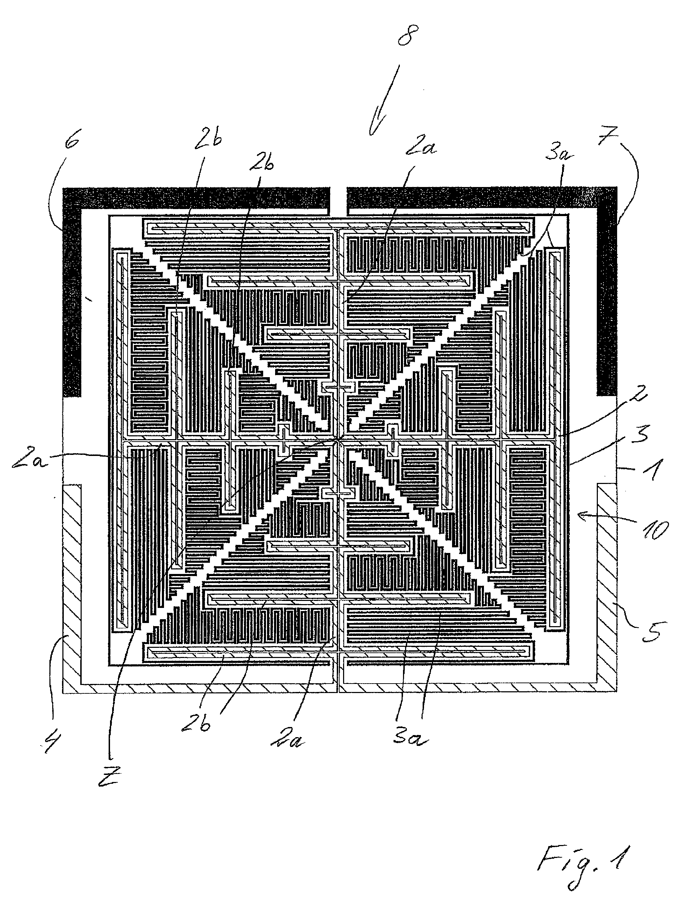

Figur 1 zeigt einen Sensor 8 eines ersten Ausführungsbeispiels in einer Draufsicht. Der Sensor dient der kalorimetrischen Messung einer Eigenschaft eines fluiden Messmediums, das beispielsweise ein Gas oder insbesondere eine Flüssigkeit sein kann. Der Sensor 8 umfasst ein Substrat 1, beispielsweise aus Aluminiumoxidkeramik, das einer ersten Widerstandsbahn 2 und einer zweiten Widerstandsbahnen 3 als Träger dient. Die Widerstandsbahn 2 und 3 sind jeweils aus einem temperaturabhängigen Widerstandsmaterial, beispielsweise Platin oder einer Platinlegierung, in Dünnschichttechnik hergestellt. Die Herstellung alternativ in Dickschichttechnik wäre ebenfalls realisierbar. Bei der Messung dient die erste Widerstandsbahn 2 als elektrisch direkt beheizbarer Heizwiderstand und die zweite Widerstandsbahn 3 als temperaturabhängiger Messwiderstand. Die Widerstandsbahn 2 ist über erste Anschlüsse 4 und 5 und die Widerstandsbahn 3 ist über zweite Anschlüsse 6 und 7 elektrisch an eine Messeinrichtung anschließbar. Die Anschlüsse 4 bis 7 sind jeweils als Kontaktfeld auf dem Substrat 1 gebildet. Sie werden gemeinsam mit der jeweils zugeordneten Widerstandsbahn 2 bzw. 3 erzeugt. Die Widerstandsbahnen 2 und 3 und die Anschlüsse 4 bis 7 sind auf der gleichen Oberfläche des Substrats 1 gemeinsam angeordnet.

Die Widerstandsbahnen 2 und 3 verlaufen jeweils in Schleifen, die Widerstandsbahn 2 in Schleifen 2a und 2b und die Widerstandsbahn 3 in Schleifen 3a. Die Schleifen 2a, 2b und 3a sind ineinander verzweigt. Sie bilden gemeinsam eine verzweigte Bahnstruktur 10. In dem als die Bahnstruktur 10 erhaltenen Flächenmuster verzweigt die Widerstandsbahn 2 in Schleifenzweige 2a, von denen jeder wieder in weitere Schleifenzweige 2b verzweigt. Es wird eine mehrgliedrige, beispielhaft zweigliedrige Anordnung von Schleifenzweigen erhalten, in denen die Schleifenzweige 2a die primären oder Hauptzweige und die Schleifen 2b die sekundären oder Nebenzweige bilden. Die Widerstandsbahn 3 belegt die zwischen den Schleifenzweigen 2a und 2b frei bleibende Substratfläche. Die Schleifenzweige 2a und 2b unterteilen die frei bleibende Fläche in sektor- oder feldförmige Parzellen. Die Parzellen weisen jeweils einen Öffnungsbereich auf, durch den die Widerstandsbahn 3 in die jeweilige Parzelle und auch wieder aus der betreffenden Parzelle geführt ist. In den Parzellen verläuft die Widerstandsbahn 3 jeweils in Schleifen 3a. Desweiteren bildet die Widerstandsbahn 3 auch die Schleifenzweige 2a und 2b umgebende Schleifen 3a, d.h. die Schleifenzweige 2a und 2b ragen in diese umgebenden Schleifen 3a hinein.

Die zweite Widerstandsbahn 3 nimmt im Vergleich mit der ersten Widerstandsbahn 2 einen größeren Teil der Gesamtfläche der Bahnstruktur 10 ein. Die erste Widerstandsbahn 2 ist dem Verlauf nach so gestaltet, dass sie sich über zumindest im Wesentlichen die gesamte Fläche der Bahnstruktur 10 in solch einer Weise gleichmäßig verteilt, dass die gesamte von der Bahnstruktur 10 eingenommene Messfläche bei der Messung gleichmäßig beheizt wird. Die zweite Widerstandsbahn 3 ist so gestaltet, dass sie zumindest im Wesentlichen den gesamten frei bleibenden Teil der Messfläche der Bahnstruktur 10 gleichmäßig und mit hohem Flächendeckungsgrad belegt. Gleichzeitig weist die Widerstandsbahn 3 eine große Länge auf. Sie verläuft in einem feinen Mäandermuster.

Die von den Widerstandsbahnen 2 und 3 gebildeten Messfläche, nämlich die Bahnstruktur 10, ist quadratisch. Sie weist eine zur Draufsicht parallele, d.h. zur Messfläche orthogonale zentrale Achse Z auf, um die die Schleifen 2a, 2b und 3a der Widerstandsbahnen 2 und 3 in einer vierzähligen Drehsymmetrie angeordnet sind. Die zentrale Achse Z bildet die Symmetrieachse der Bahnstruktur 10.

Die erste Widerstandsbahn 2 verzweigt in dem die Achse Z enthaltenden Zentralbereich der Bahnstruktur 10, im Ausführungsbeispiel exakt im Zentrum, entsprechend der Drehsymmetrie in vier Hauptzweige 2a, die sich aus dem Zentralbereich in Richtung auf die Peripherie der Bahnstruktur 10 erstrecken, beispielhaft radial. Benachbarte Hauptzweige 2a weisen der vierzähligen Drehsymmetrie entsprechend jeweils in einem rechten Winkel zueinander. Die Nebenzweige 2b erstrecken sich vom jeweiligen Hauptzweig 2a beispielhaft ebenfalls orthogonal weg. In der Draufsicht bilden die Hauptzweige 2a ein Kreuz und die Nebenzweige 2b mehrere konzentrisch zueinander angeordnete Quadrate, mit Öffnungsbereichen für die Widerstandsbahn 3 an den Ecken jedes der Quadrate.

Die erste Widerstandsbahn 2 ist von ihren Anschlüssen 4 und 5 ausgehend in einem ersten Schleifenzweig 2a bis in den Zentralbereich geführt und verzweigt dort in die drei anderen Hauptzweige 2a. Genauer gesagt erstreckt sie sich von einem ihrer Anschlüsse, beispielsweise dem Anschluss 4, über einen Bahnabschnitt des ersten Hauptzweigs 2a und dessen Nebenzweige 2b bis in den Zentralbereich und von dort unter Ausbildung der Schleifenzweige 2a und 2b im Uhrzeigersinn bis sie wieder in Ausbildung des ersten Hauptzweigs 2a aus der Bahnstruktur 10 und in den anderen Anschluss 5 geführt ist. Die zweite Widerstandsbahn 3 erstreckt sich von einem ihrer Anschlüsse ausgehend, beispielsweise dem Anschluss 6, zunächst peripher um eine Hemisphäre der Bahnstruktur 10 bis nahe zu dem ersten Hauptzweig 2a und ist dann in einen ersten der insgesamt vier von den Hauptzweigen 2a begrenzten Sektoren geführt. Sie erstreckt sich innerhalb des betreffenden Sektors und den von den Nebenzweigen 2b begrenzten Feldern des Sektors in einem Mäandermuster durch den Sektor und aus diesem wieder hinaus und anschließend im Uhrzeigersinn nacheinander durch jeden der weiteren drei Sektoren in gleicher Weise hindurch, bis sie in der anderen Hemisphäre der Bahnstruktur 10 peripher zurückgeführt wird und im anderen Anschluss 7 endet.

Zu den Anschlüssen 4 bis 7 sei noch nachgetragen, dass ein erstes Anschlusspaar, gebildet von dem ersten Anschluss 4 und dem zweiten Anschluss 6, und ein zweites Anschlusspaar, gebildet von dem anderen ersten Anschluss 5 und dem anderen zweiten Anschluss 7, einander über den Zentralbereich der Bahnstruktur 10 gegenüberliegend neben der Bahnstruktur 10 angeordnet sind.

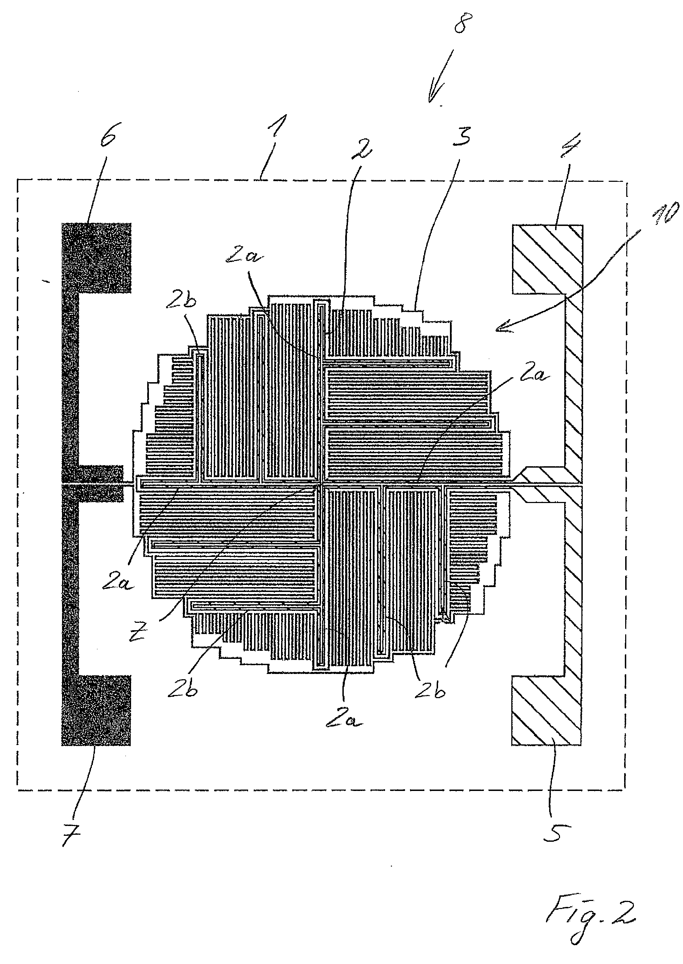

Figur 2 zeigt einen Sensor 8 eines zweiten Ausführungsbeispiels mit ebenfalls einer verzweigten Bahnstruktur 10. Die erste Widerstandsbahn 2 verzweigt sich wieder im Zentralbereich mit der zentralen Symmetrieachse Z in vier Hauptzweige 2a, von denen allerdings Nebenzweige 2b jeweils nur in eine Richtung weisend abzweigen. Die Bahnstruktur 10 weist im ganzen gesehen wieder eine vierzählige Drehsymmetrie in Bezug auf die zentrale Achse Z auf. Von der Anordnung der Nebenzweige 2b abgesehen und ferner einer an einen Kreis angenäherten Messfläche entspricht die Bahnstruktur 10 derjenigen des ersten Ausführungsbeispiels, so dass auf die dortigen Ausführungen verwiesen werden kann. Die Bahnstruktur 10 des zweiten Ausführungsbeispiels könnte aber auch zu einer quadratischen Messfläche umgebildet werden. In solch einer Modifikation wären die Nebenzweige 2b vorzugsweise gleichlang und wiesen auch zumindest im Wesentlichen die gleiche Länge wie jeder der Hauptzweigen 2a auf.

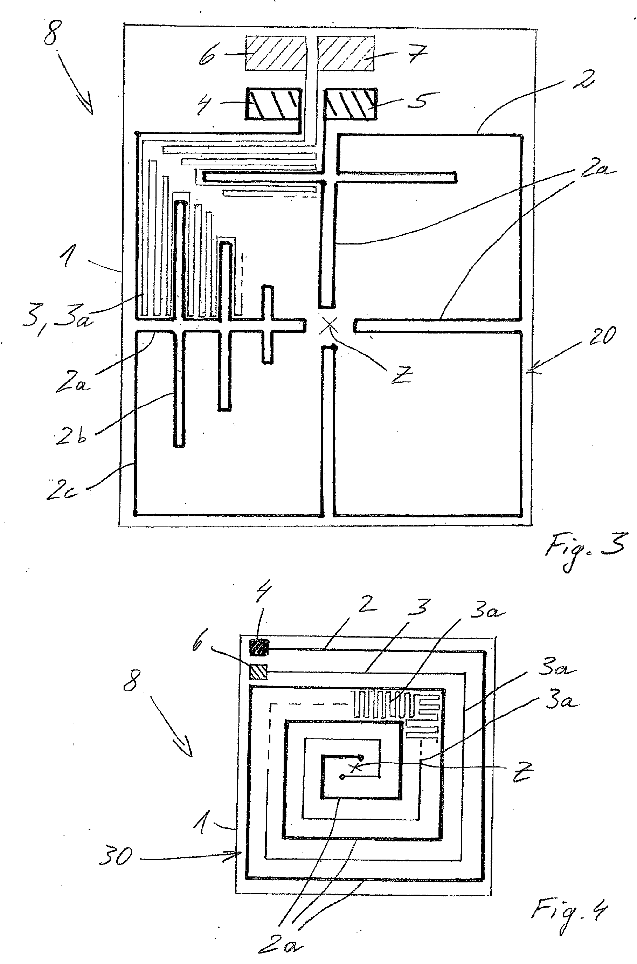

Figur 3 zeigt einen Sensor 8 eines zweiten Ausführungsbeispiels mit einer verzweigten Bahnstruktur 20, die im Unterschied zum ersten und zweiten Ausführungsbeispiel nicht im Zentralbereich, sondern von der Peripherie her in Schleifen 2a verzweigt. Die erste Widerstandsbahn 2, die wieder den Heizwiderstand bildet, verläuft in einer peripheren Schleife 2c, von der um die zentrale Achse Z in gleichmäßiger Dreh- bzw. Bogenwinkelteilung mehrere Schleifenzweige 2a in Richtung auf den Zentralbereich, beispielhaft jeweils in Richtung auf die zentrale Achse Z, abzweigen. Die Schleifenzweige 2a verzweigen wie im ersten und zweiten Ausführungsbeispiel in weitere Schleifenzweige 2b, so dass auch im dritten Ausführungsbeispiel die Widerstandsbahn 2 in Hauptzweige 2a und Nebenzweige 2b verzweigt. Das Verzweigungsmuster der Widerstandsbahn 2 entspricht in einer ersten Näherung dem Verzweigungsmuster der Widerstandsbahn 2 des ersten Ausführungsbeispiels. Es wurden die Nebenzweige 2b lediglich für einen der Hauptzweige 2a eingezeichnet, die Verzweigung soll jedoch bei den anderen Hauptzweigen 2a in der gleichen Weise erfolgen. Anstelle der wie im ersten Ausführungsbeispiel an einen Tannenbaum erinnernden Verzweigung in die Nebenzweigung 2b könnte auch eine Verzweigung in Nebenzweige 2b entsprechend des zweiten Ausführungsbeispiels realisiert werden. In Bezug auf die zweite Widerstandsbahn 3, den Messwiderstand, gilt das bereits zum ersten Ausführungsbeispiel gesagte mit dem Unterschied, dass die Widerstandsbahn 3 von ihren Anschlüssen 6 und 7 ausgehend zwischen den Anschlüssen 4 und 5 der ersten Widerstandsbahn 2 hindurch in die periphere Schleife 2c geführt ist und von dort aus durch die Sektoren und Felder zwischen den Schleifenzweigen 2a und 2b verläuft. In einer Abwandlung könnte die zweite Widerstandsbahn 3 jedoch wie im ersten und im zweiten Ausführungsbeispiel an einer anderen Seite der Bahnstruktur 20 in einen der Sektoren geführt sein, wobei der betreffende Sektor einen Öffnungsbereich nach außen vergleichbar dem ersten oder zweiten Ausführungsbeispiel aufweisen würde. Im Ergebnis wird auch für die Bahnstruktur 20 mit der peripher verzweigenden ersten Widerstandsbahn 2 eine vierzählige Drehsymmetrie erhalten.

Figur 4 zeigt einen Sensor 8 eines vierten Ausführungsbeispiels mit einer mehrfach geschachtelten Bahnstruktur 30. In der Bahnstruktur 30 verlaufen eine erste Widerstandsbahn 2 und eine zweite Widerstandsbahn 3 jeweils spiralförmig um die gemeinsame zentrale Achse Z, so dass die beiden spiralförmigen Widerstandsbahnen 2 und 3 einander jeweils wechselseitig umgebend in einer Vielzahl von Umläufen um die Achse Z umlaufen. Lediglich der Vereinfachung der Darstellung wegen sind in Figur 4 für die Widerstands bahnen 2 und 3 jeweils nur wenige Umläufe gezeigt, um das Prinzip zu demonstrieren. Aufgrund der ineinander geschachtelten bzw. geschlungenen Bahnen 2 und 3 verläuft jede der Schleifen 2a mit Ausnahme einer am weitesten außen umlaufenden Schleife, beispielhaft eine der Schleifen 2a der Widerstandsbahn 2, und jeweils einem inneren Ende der Bahnen 2 und 3 zwischen jeweils einem weiter innen und einem weiter außen liegenden Bahnabschnitt der jeweils anderen Bahn 3 oder 2. Von der zentralen Achse Z aus nach außen entsteht, wie im übrigen auch bei den Bahnstrukturen 10 und 20, eine alternierende Abfolge von Bahn- oder Schleifenabschnitten 2a und 3a, und dies in Bezug auf jede zur zentralen Achse Z radialen Richtung. Im ersten und dritten Ausführungsbeispiel wird eine mehrmalige Abfolge von einem oder mehreren Bahnabschnitt(en) der Widerstandsbahn 3 auf mehrere durch solche Bahnabschnitte voneinander getrennte Schleifen 2a oder 2b im Bereich von schmalen, nur gering belegten Diagonalstreifen nicht genau erfüllt. Aber auch in diesen Ausführungsbeispielen gilt, dass zu jeder radialen Richtung eine parallele Achse existiert, längs der die Eigenschaft des Alternierens vorliegt. Denkt man sich einen geraden Streifen über die Bahnstruktur 10, 20 oder 30 gelegt, der die jeweilige Bahnstruktur 10, 20 oder 30 gerade überdeckt, so wird für jede radiale Richtung solch eines Streifens in nahezu idealer Weise die jeweils gleiche Abfolge von Bahnabschnitten der Widerstandsbahn 2 und Bahnabschnitten der Widerstandsbahn 3 erzielt.

Auch für die geschachtelte Bahnstruktur 30 wird aufgrund der großen Anzahl von Umläufen eine mehrzählige Drehsymmetrie in Bezug auf die zentrale Achse Z erhalten. Beispielhaft handelt es sich wie in den anderen Ausführungsbeispielen wieder um eine vierzählige Drehsymmetrie. Die Bahnstruktur 30 ist entsprechend wie in den anderen Ausführungsbeispielen quadratisch oder kann zumindest, was die praktischen Belange anbetrifft, aufgrund der geringen Abstände zwischen jeweils benachbarten Bahnabschnitten 2a und 3a als quadratisch angesehen werden. Die Bahnen 2 und 3 verlaufen der Drehsymmetrie entsprechend in aneinander gesetzten Schleifen 2a und 3a, die jeweils zwei parallele Bahn- oder Schleifenabschnitte und einen zu beiden parallelen Bahn- oder Schleifenabschnitten rechtwinkligen Verbindungsabschnitt aufweisen. In einer Verallgemeinerung können die Widerstandsbahnen 2 und 3 allerdings auch in einem anders geformten Polygonzug, grundsätzlich sogar in kontinuierlicher Krümmung, um die zentrale Achse Z spiralig verschachtelt bzw. verschlungen umlaufen, um eine fünf-, sechs- oder noch höherzählige Drehsymmetrie zu erhalten.

In Figur 4 ist für einen der Schleifenzweige 3a angedeutet, dass die Widerstandsbahn 3 in erster Ordnung einen um die zentrale Achse Z umlaufenden Polygonzug und in zweiter Ordnung dieser Polygonzug in sich mäanderförmig verlaufen kann. Solch eine Modifikation ist im Hinblick darauf vorteilhaft, dass der Temperaturmesswiderstand 3 einen größeren Teil der von der Bahnstruktur 30 gebildeten Messfläche einnehmen sollte als die erste Widerstandsbahn 2, die auch im vierten Ausführungsbeispiel wieder den Heizwiderstand bildet. Im Ausführungsbeispiel der Figur 4 sind die Anschlüsse 4 bis 6 der Widerstandsbahn 2 und 3 an unterschiedlichen Flächen des platten- oder folienartigen Substrats 1 angeordnet. In Figur 4 ist einer der ersten Anschlüsse der ersten Widerstandsbahn 2, beispielhaft der Anschluss 4, und einer der ersten Anschlüsse der Widerstandsbahn 3, beispielhaft der Anschluss 6, auf der gleichen Substratfläche wie die Bahnstruktur 30 angeordnet. Im Zentralbereich sind die Widerstandsbahnen 2 und 3 jeweils durch das Substrat 1 hindurch zur gegenüberliegenden Substratfläche oder auf eine optionale Innenlage geführt und dort mit den weiteren, nicht dargestellten Anschlüssen 5 und 7 verbunden.

Auch zu den Ausführungsbeispielen der Figuren 1 bis 3 sei noch nachgetragen, dass Bahnstrukturen in vierzähliger Drehsymmetrie zwar bevorzugt werden, nicht zuletzt auch wegen der einfachen Herstellbarkeit, dass grundsätzlich aber auch eine Bahnstruktur 10 oder 20 oder auch eine Bahnstruktur 30 in dreizähliger Drehsymmetrie und im Falle der ineinander verzweigten Bahnstrukturen 10 und 20 vorteillzafterweise wenigstens mit Haupt- und Nebenzweigen 2a und 2b Gegenstand der Erfindung sind. Desweiteren können auch die ineinander verzweigten Bahnstrukturen in einer fünf-, sechs- oder höherzähligen Drehsymmetrie ausgeführt sein.

Es kann vorteilhaft sein, wenn der Heizwiderstand 2 einen im Vergleich mit dem Messwiderstand 3 geringeren Widerstandsnennwert und der Messwiderstand 3 einen dementsprechend vergleichsweise höheren Nennwert aufweisen. So kann der Heizwiderstand beispielsweise einen Nennwert von 20 Ohm und der Messwiderstand einen Nennwert von 100 Ohm, also einen fünfmal höheren Widerstand als der Heizwiderstand aufweisen. Bei einem Verhältnis von 1:5 kann der Heizwiderstand insbesondere einen Wert von 200 Ohm und der Messwiderstand insbesondere einen Wert von 1000 Ohm aufweisen. Vorteilhaft sind aber auch noch Widerstandsverhältnisse, in denen der Messwiderstand 3 wenigstens dreimal größer als der Heizwiderstand ist. Vorteilhafterweise ist der Messwiderstand höchstens siebenmal so hoch wie der Heizwiderstand. Eine kostengünstige Ausführungsform besteht aus einem quadratischen oder nahezu quadratischen Substrat 1, auf dem beispielsweise wie dargestellt in einer vierzähligen Drehsymmetrie die Widerstände 2 und 3 in Dünnschichttechnik aufgebracht sind. Die Widerstände 2 und 3 sind vorteilhafterweise als Platinwiderstände, beispielsweise als Pt200-Widerstand 2 und Pt1000-Widerstand 3 ausgeführt. Die Bahnen 2 und 3 können vorteilhafterweise jeweils in einer Dicke aus dem Bereich von 0,5 bis 10 µm ausgeführt sein. Die Breite der Widerstandsbahn 3 des Messwiderstands kann insbesondere aus dem Bereich von 3 bis 20 µm gewählt sein. Die parallel nebeneinander verlaufenden Bahnabschnitte des Messwiderstands 3 können voneinander jeweils einen Abstand haben, der vorzugsweise aus dem gleichen Bereich wie die Breite der Bahn 3 gewählt und insbesondere zumindest in etwa der Breite der Widerstandsbahn 3 entsprechen kann.

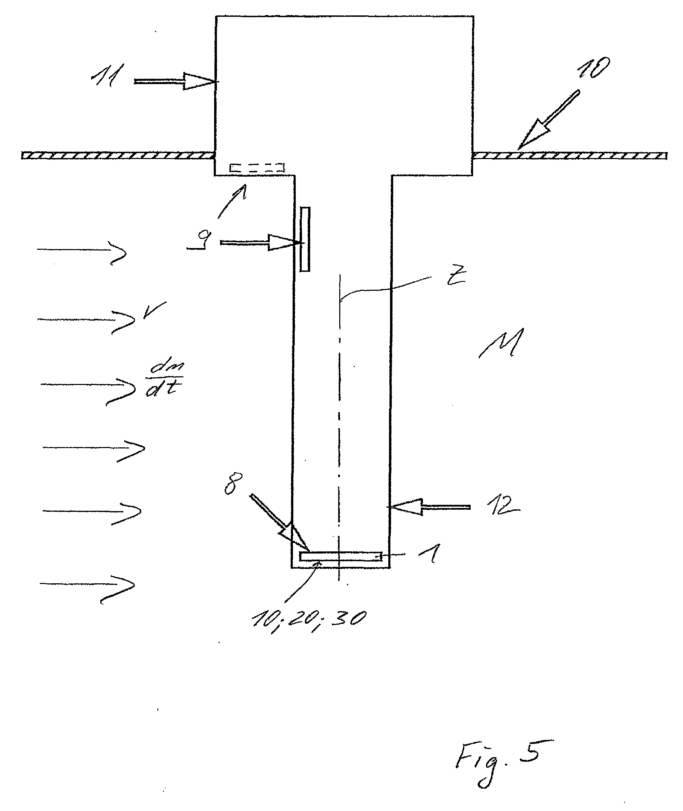

Figur 5 zeigt eine Messanordnung zur kalorimetrischen Bestimmung des Volumen- oder Massenstroms dm/dt oder der Strömungsgeschwindigkeit v eines gasförmigen oder flüssigen Mediums M. Beispielhaft handelt es sich um eine Strömung in einem Rohr 10, grundsätzlich könnte es sich aber auch um eine offene Strömung handeln. Die Messanordnung umfasst eine Montagestruktur 11, die der mechanischen Verbindung mit dem Rohr 10 und auch als Anschlussstruktur für den elektrischen Anschluss der Messanordnung dient. Von der Montagestruktur 11 ragt ein Schutzrohr 12 ab, im montierten Zustand in die Strömung des Mediums M hinein, wobei die Montagestruktur 11 die Messanordnung an der Rohrwand befestigt. An einem von der Montagestruktur 11 abgewandten freien Ende des Schutzrohrs 12 ist der Sensor 8 angeordnet, wobei die Bahnstruktur mit den Widerstandsbahnen 2 und 3, beispielsweise eine der Bahnstrukturen 10, 20 und 30, entweder dem freien Ende des Schutzrohrs 12 oder der Montagestruktur 11 zugewandt ist. Der Sensor 8 ist vorzugsweise mit einer die Wärmeleitung verbessernden Wärmeleitpaste mit der Innenwand des Schutzrohrs 12 kontaktiert.

Aufgrund der gewählten Bahnstruktur, beispielsweise der Bahnstruktur 10, 20 oder 30, bedarf es keiner Justierung der Drehwinkelposition der Messanordnung in Bezug auf die zentrale Achse Z, die der bevorzugten Einbaulage entsprechend zumindest im wesentlichen orthogonal zur Strömungsrichtung des Mediums M weist.

Die Messanordnung umfasst über den Sensor 8 hinaus einen Temperaturreferenzsensor 9, vorzugsweise ebenfalls einen temperaturabhängigen Messwiderstand, mit dem die Temperatur des Mediums M außerhalb des Wirkbereichs des Heizwiderstands 2 gemessen wird. Der Temperaturreferenzsensor 9 ist vom Sensor 8 in einem ausreichenden Abstand und wie bevorzugt stromauf vom Sensor 8 angeordnet. Er kann ebenfalls an einer Innenwand des Schutzrohrs 12 und vorzugsweise mittels Wärmeleitpaste mit dem Schutzrohr 12 kontaktiert sein. Alternativ kann der Sensor 9 wie in gestrichelter Linie angedeutet außerhalb des Schutzrohrs 12 an der Montagestruktur 11, beispielsweise einer Stirnfläche der Montagestruktur 11 angeordnet sein, wobei die Fläche, beispielsweise Stirnfläche, sich im montierten Zustand innerhalb des Rohres 10 befindet und mit dem strömenden Medium M in Kontakt steht.

In den Ausführungsbeispielen dient das Substrat 1 als Träger jeweils nur einer einzigen Widerstandsbahn 2 und einer einzigen Widerstandsbahn 3. Auf dem Substrat können grundsätzlich jedoch auch mehrere erste Widerstandsbahnen für jeweils einen Heizwiderstand oder mehrere zweite Widerstandsbahnen für jeweils einen Messwiderstand angeordnet sein, um beispielsweise mehrere Bahnstrukturen wie etwa die beispielhaften Bahnstrukturen 10, 20 oder 30 nebeneinander anzuordnen. Grundsätzlich können aber auch zwei oder sogar noch mehr erste Widerstandsbahnen zur Bildung jeweils eines Heizwiderstands oder zwei oder noch mehr erste Widerstandsbahnen zur Bildung jeweils eines Messwiderstands ineinander verzweigt oder geschachtelt sein. Einer Bahnstruktur mit nur einer einzigen ersten Widerstandsbahn und einer einzigen zweiten Widerstandsbahn wird allerdings der Vorzug gegeben.

## Patentansprüche

1. Kalorimetrischer Sensor, umfassend:
(a) ein Substrat (1),
(b) eine auf dem Substrat (1) in Schleifen (2a, 2b; 2a, 2b, 2c; 2a) verlaufende erste Widerstandsbahn (2) aus einem temperaturabhängigen Widerstandsmaterial,
(c) und eine auf dem Substrat (1) in Schleifen (3a) verlaufende zweite Widerstandsbahn (3) aus einem temperaturabhängigen Widerstandsmaterial,
(d) von denen die eine einen Heizwiderstand (2) und die andere einen Temperaturmesswiderstand (3) bildet,
(e) wobei die Widerstandsbahnen (2, 3) in einer Draufsicht gemeinsam eine verzweigte oder verschachtelte Bahnstruktur (10; 20; 30) mit einer zur Richtung der Draufsicht parallelen, zentralen Achse (Z) bilden,
(f) und wobei sich Schleifen (2a, 2b) der ersten Widerstandsbahn (2) in der Draufsicht in unterschiedliche, jeweils quer zur zentralen Achse (Z) weisende Richtungen zwischen Schleifen (3a) der zweiten Widerstandsbahn (3) oder in Schleifen (3a) der zweiten Widerstandsbahn (3) hinein erstrecken,
**dadurch gekennzeichnet, dass**
(g) zu jeder zur zentralen Achse (Z) radialen Richtung eine in die jeweilige Richtung erstreckte oder zu der jeweiligen Richtung parallel beabstandete Achse existiert, längs der auf mehrere in der jeweiligen radialen Richtung voneinander beabstandete Bahn- oder Schleifenabschnitte der ersten Widerstandsbahn (2) jeweils ein oder mehrere Bahn- oder Schleifenabschnitte der zweiten Widerstandsbahn (3) folgt oder folgen.

2. Kalorimetrischer Sensor nach Anspruch 1, **dadurch gekennzeichnet, dass** die erste Widerstandsbahn (2) in Schleifenzweige (2a) verzweigt, die sich in der Draufsicht gesehen aus einem Zentralbereich der Bahnstruktur (10) nach außen in Richtung auf eine Peripherie der Bahnstruktur (10; 20) oder von der Peripherie nach innen in Richtung auf den Zentralbereich erstrecken, und die zweite Widerstandsbahn (3) in von den Schleifenzweigen (2a) seitlich begrenzten Sektoren oder Feldern verläuft.

3. Kalorimetrischer Sensor nach dem vorhergehenden Anspruch, **dadurch gekennzeichnet, dass** die Schleifenzweige (2a) Hauptzweige der ersten Widerstandsbahn (2) bilden, von den Hauptzweigen (2a) jeweils wenigstens ein Nebenzweig (2b) abzweigt und die zweite Widerstandsbahn (3) zwischen den Haupt- und den Nebenzweigen (2a, 2b) verläuft.

4. Kalorimetrischer Sensor nach einem der zwei vorhergehenden Ansprüche, **dadurch gekennzeichnet, dass** die erste Widerstandsbahn (2) einen ersten Schleifenzweig (2a) aufweist, der sich von ersten Anschlüssen (4, 5) der ersten Widerstandsbahn (2) in den Zentralbereich erstreckt und im Zentralbereich in weitere Schleifenzweige (2a) verzweigt, oder die erste Widerstandsbahn (2) sich in einer peripheren Schleife (2c) um die Achse (Z) erstreckt und von der peripheren Schleife (2c) mehrere Schleifenzweige (2a) nach innen in Richtung auf den Zentralbereich abzweigen und dass die zweite Widerstandsbahn (3) sich von zweiten Anschlüssen (6, 7) ausgehend in die von den Schleifenzweigen (2a, 2b) begrenzten Sektoren oder Felder, optional auch peripher um die Schleifenzweige (2a, 2b) erstreckt.

5. Kalorimetrischer Sensor nach dem vorhergehenden Anspruch, **dadurch gekennzeichnet, dass** ein erstes Paar (4, 6) der Anschlüsse (4, 5, 6, 7) und ein zweites Paar (5, 7) der Anschlüsse (4, 5, 6, 7) an unterschiedlichen Seiten der Bahnstruktur (10), vorzugsweise einander über den Zentralbereich gegenüberliegend, angeordnet sind.

6. Kalorimetrischer Sensor nach einem der vorhergehenden Ansprüche, **dadurch gekennzeichnet, dass** eine geschachtelte Bahnstruktur (20) vorliegt, in der die Widerstandsbahnen (2, 3) in der Draufsicht gesehen so ineinander geschachtelt sind, dass Schleifen (2a) der ersten Widerstandsbahn (2) Schleifen (3a) der zweiten Widerstandsbahn (13) und Schleifen (3a) der zweiten Widerstandsbahn (3) Schleifen (2a) der ersten Widerstandsbahn (2) umgeben.

7. Kalorimetrischer Sensor nach einem der vorhergehenden Ansprüche, **dadurch gekennzeichnet, dass** die Bahnstruktur (10; 20; 30) eine wenigstens dreizählige, vorzugsweise wenigstens vierzählige Drehsymmetrie aufweist,

8. Kalorimetrischer Sensor nach einem der vorhergehenden Ansprüche, **dadurch gekennzeichnet, dass** die zweite Widerstandsbahn (3) zwischen den Schleifenzweigen (2a) des Anspruchs 2 oder zwischen den umgebenden Schleifen (2a) des Anspruchs 6 in Schleifen (3a) geführt ist.

9. Kalorimetrischer Sensor nach einem der vorhergehenden Ansprüche, **dadurch gekennzeichnet, dass** zwischen benachbarten Bahnabschnitten der Widerstandsbahnen (2, 3) jeweils ein Abstand verbleibt, der kleiner als eine Dicke des Substrats (1), vorzugsweise kleiner als 50 µm, ist.

10. Kalorimetrischer Sensor nach einem der vorhergehenden Ansprüche und mit wenigstens einem der folgenden Merkmale:
(i) Aluminiumoxidkeramik bildet das Substrat (1);
(ii) die Widerstandsbahn (2) des Heizwiderstands und die Widerstandsbahn (3) des Temperaturmesswiderstands bestehen aus dem gleichen Widerstandsmaterial, beispielsweise Platin;
(iii) die Widerstandsbahnen (2, 3) sind in Dickschichttechnik oder aber vorzugsweise in Dünnschichttechnik auf das Substrat (1) aufgebracht;
(iv) der Temperaturmesswiderstand (3) weist einen höheren, vorzugsweise um wenigstens den Faktor 4 (vier) höheren Widerstandsnennwert als der Heizwiderstand (2) auf.

11. Kalorimetrischer Sensor nach einem der vorhergehenden Ansprüche, **dadurch gekennzeichnet, dass** die Widerstandsbahn (2) des Heizwiderstands und die Widerstandsbahn (3) des Temperaturmesswiderstands auf der gleichen Fläche des Substrats (1) verlaufen.

12. Kalorimetrischer Sensor nach einem der vorhergehenden Ansprüche, **dadurch gekennzeichnet, dass** die Schleifen (2a, 2b, 3a; 2a, 2b, 2c, 3a; 2a, 3a) gerade oder aus geraden Abschnitten der ersten oder der zweiten Widerstandsbahn (2, 3) zusammengesetzt sind.

13. Kalorimetrischer Sensor nach einem der vorhergehenden Ansprüche, der zusätzlich einen außerhalb eines Wirkbereichs des Heizwiderstands (2) angeordneten Temperaturreferenzsensor (9) und eine mit dem Heizwiderstand (2), dem Temperaturmesswiderstand (3) und dem Temperaturreferenzsensor (9) verbundene Steuerung oder Regelung für die Versorgung des Heizwiderstands (2) mit einem dem gewählten Messverfahren (CCA, CTA) entsprechenden Strom aufweist.

14. Kalorimetrischer Sensor nach einem der vorhergehenden Ansprüche, der eine Montagestruktur (11) für die Montage an einer Messstelle und ein von der Montagestruktur (11) abragendes, in ein fluides Medium (M) eintauchbares Schutzrohr (12) mit einem von der Montagestruktur (11) entfernten axialen Ende aufweist, an dem das Substrat (1) mit der von der Montagestruktur (11) abgewandten Bahnstruktur (10; 20; 30) angeordnet ist.

15. Kalorimetrischer Sensor nach einem der vorhergehenden Ansprüche, **gekennzeichnet durch** die Verwendung als Sensor (8) zur Bestimmung einer oder mehrerer Größe(n) aus der Gruppe bestehend aus Massenstrom (dm/dt), Volumenstrom, Strömungsgeschwindigkeit (v), Wärmekapazität und Wärmeleitfähigkeit eines fluiden Mediums (M), wobei der Sensor (8) insbesondere für die Überwachung der Versorgung einer Maschine mit Kühl- oder Schmiermedium oder eines anderen strömenden Mediums (M) verwendet werden kann.

## Claims

1. A calorimetric sensor, comprising:
(a) a substrate (1);
(b) a first resistance track (2) which extends in loops (2a, 2b; 2a, 2b, 2c; 2a) on the substrate (1) and is made of a temperature-dependent resistance material;
(c) and a second resistance track (3) which extends in loops (3a) on the substrate (1) and is made of a temperature-dependent resistance material,
(d) one of which forms a heating resistor (2) and the other of which forms a temperature measuring resistor (3),
(e) wherein in a top view, the resistance tracks (2, 3) together form a branched or nested track structure (10; 20; 30) comprising a central axis (Z) which is parallel to the direction of the top view,
(f) and wherein in the top view, loops (2a, 2b) of the first resistance track (2) extend in different directions, which respectively point transverse to the central axis (Z), between loops (3a) of the second resistance track (3) or into loops (3a) of the second resistance track (3),
**characterised in that**
(g) for each direction which is radial with respect to the central axis (Z), an axis exists which extends in the respective direction or is spaced parallel to the respective direction and along which a plurality of track portions or loop portions of the first resistance track (2) which are spaced from each other in the respective radial direction are respectively followed by one or more track portions or loop portions of the second resistance track (3).

2. The calorimetric sensor according to Claim 1, **characterised in that** the first resistance track (2) branches into loop branches (2a) which, as viewed in the top view, extend outwards from a central region of the track structure (10) towards a periphery of the track structure (10; 20) or inwards from the periphery towards the central region, and the second resistance track (3) extends in sectors or fields which are laterally delineated by the loop branches (2a).

3. The calorimetric sensor according to the preceding claim, **characterised in that** the loop branches (2a) form main branches of the first resistance track (2), at least one ancillary branch (2b) branches off respectively from the main branches (2a), and the second resistance track (3) extends between the main and ancillary branches (2a, 2b).

4. The calorimetric sensor according to any one of the preceding two claims, **characterised in that** the first resistance track (2) comprises a first loop branch (2a) which extends from first connectors (4, 5) of the first resistance track (2) into the central region and branches into further loop branches (2a) in the central region, or the first resistance track (2) extends around the axis (Z) in a peripheral loop (2c) and a plurality of loop branches (2a) branch off from the peripheral loop (2c) inwards towards the central region, and **in that** the second resistance track (3) extends from second connectors (6, 7) into the sectors or fields which are delineated by the loop branches (2a, 2b) and optionally also peripherally around the loop branches (2a, 2b).

5. The calorimetric sensor according to the preceding claim, **characterised in that** a first pair (4, 6) of the connectors (4, 5, 6, 7) and a second pair (5, 7) of the connectors (4, 5, 6, 7) are arranged on different sides of the track structure (10), preferably opposite each other across the central region.

6. The calorimetric sensor according to any one of the preceding claims, **characterised in that** a nested track structure (20) is provided in which the resistance tracks (2, 3) are nested in each other as viewed in the top view, such that loops (2a) of the first resistance track (2) surround loops (3a) of the second resistance track (3) and loops (3a) of the second resistance track (3) surround loops (2a) of the first resistance track (2).

7. The calorimetric sensor according to any one of the preceding claims, **characterised in that** the track structure (10; 20; 30) exhibits at least a threefold and preferably at least a fourfold rotational symmetry.

8. The calorimetric sensor according to any one of the preceding claims, **characterised in that** the second resistance track (3) is guided in loops (3a) between the loop branches (2a) of Claim 2 or between the surrounding loops (2a) of Claim 6.

9. The calorimetric sensor according to any one of the preceding claims, **characterised in that** a distance respectively remains between adjacent track portions of the resistance tracks (2, 3) which is smaller than a thickness of the substrate (1) and preferably smaller than 50 µm.

10. The calorimetric sensor according to any one of the preceding claims and comprising at least one of the following features:
(i) alumina ceramics form the substrate (1);
(ii) the resistance track (2) of the heating resistor and the resistance track (3) of the temperature measuring resistor consist of the same resistance material, for example platinum;
(iii) the resistance tracks (2, 3) are applied to the substrate (1) using a thick-film technique or preferably a thin-film technique;
(iv) the temperature measuring resistor (3) exhibits a nominal resistance which is higher, preferably by a factor of at least 4 (four), than the heating resistor (2).

11. The calorimetric sensor according to any one of the preceding claims, **characterised in that** the resistance track (2) of the heating resistor and the resistance track (3) of the temperature measuring resistor extend on the same surface of the substrate (1).

12. The calorimetric sensor according to any one of the preceding claims, **characterised in that** the loops (2a, 2b, 3a; 2a, 2b, 2c, 3a; 2a, 3a) are straight or are composed of straight portions of the first or second resistance track (2; 3).

13. The calorimetric sensor according to any one of the preceding claims, additionally comprising a temperature reference sensor (9), which is arranged outside of an effective range of the heating resistor (2), and a controller or regulator which is connected to the heating resistor (2), the temperature measuring resistor (3) and the temperature reference sensor (9), for supplying the heating resistor (2) with a current corresponding to the measuring method (CCA, CTA) chosen.

14. The calorimetric sensor according to any one of the preceding claims, comprising: a mounting structure (11) for mounting at a measuring point; and a protective tube (12) which projects from the mounting structure (11) and can be immersed in a fluid medium (M) and comprises an axial end which is distanced from the mounting structure (11) and at which the substrate (1) is arranged with the track structure (10; 20; 30) facing away from the mounting structure (11).

15. The calorimetric sensor according to any one of the preceding claims, **characterised by** its use as a sensor (8) for determining one or more variables from the group consisting of the mass flow (dm/dt), volume flow, flow velocity (v), thermal capacity and thermal conductivity of a fluid medium (M), wherein the sensor (8) can in particular be used for monitoring the supply of cooling or lubricating medium or another flowing medium (M) to a machine.

## Revendications

1. Capteur calorimétrique, comportant :
(a) un substrat (1),
(b) une première piste de résistance (2) constituée d'un matériau de résistance variable avec la température et s'étendant en boucles (2a, 2b ; 2a, 2b, 2c ; 2a) sur le substrat (1),
(c) et une seconde piste de résistance (3) constituée d'un matériau de résistance variable avec la température et s'étendant en boucles (3a) sur le substrat (1),
(d) pistes parmi lesquelles l'une forme une résistance de chauffage (2) et l'autre forme une résistance de mesure de température (3),
(e) dans lequel les pistes de résistance (2, 3) forment ensemble, en vue de dessus, une structure de piste ramifiée ou imbriquée (10 ; 20 ; 30) ayant un axe central (Z) parallèle à la direction de la vue de dessus,
(f) et dans lequel des boucles (2a, 2b) de la première piste de résistance (2) s'étendent, en vue de dessus, dans différentes directions respectivement perpendiculaires à l'axe central (Z) entre des boucles (3a) de la seconde piste de résistance (3) ou dans des boucles (3a) de la seconde piste de résistance (3),
**caractérisé en ce que**
(g) il existe un axe qui s'étend dans la direction respective ou qui est parallèlement espacé de la direction respective par rapport à chaque direction radiale par rapport à l'axe central (Z), le long duquel une ou plusieurs portions de piste ou de boucle de la seconde piste de résistance (3) suit ou suivent respectivement plusieurs portions de piste ou de boucle de la première piste de résistance (2) espacées les unes des autres dans la direction radiale respective.

2. Capteur calorimétrique selon la revendication 1, **caractérisé en ce que** la première piste de résistance (2) bifurque en branches de boucle (2a) qui s'étendent, lorsque vues en vue de dessus, à partir d'une zone centrale de la structure de piste (10) vers l'extérieur en direction d'une périphérie de la structure de piste (10 ; 20) ou à partir de la périphérie vers l'intérieur en direction de la zone centrale, et la seconde piste de résistance (3) s'étend dans des secteurs ou des champs latéralement délimités par les branches de boucle (2a).

3. Capteur calorimétrique selon la revendication précédente, **caractérisé en ce que** les branches de boucle (2a) forment des branches principales de la première piste de résistance (2), au moins une branche secondaire (2) bifurque respectivement des branches principales (2a) et la seconde piste de résistance (3) s'étend entre les branches principales et secondaires (2a, 2b).

4. Capteur calorimétrique selon l'une des deux revendications précédentes, **caractérisé en ce que** la première piste de résistance (2) comporte une première branche de boucle (2a) qui s'étend à partir de premières connexions (4, 5) de la première piste de résistance (2) dans la zone centrale et bifurque dans la zone centrale en d'autres branches de boucle (2a), ou la première piste de résistance (2) s'étend dans une boucle périphérique (2c) autour de l'axe (Z) et à partir de la boucle périphérique (2c), plusieurs branches de boucle (2a) bifurquent vers l'intérieur en direction de la zone centrale, et **en ce que** la seconde piste de résistance (3) s'étend en partant de secondes connexions (6, 7) dans les secteurs ou les champs délimités par les branches de boucle (2a, 2b), facultativement de manière également périphérique autour des branches de boucle (2a, 2b).

5. Capteur calorimétrique selon la revendication précédente, **caractérisé en ce qu'**une première paire (4, 6) des connexions (4, 5, 6, 7) et une seconde paire (5, 7) des connexions (4, 5, 6, 7) sont disposées sur différents côtés de la structure de piste (10), de préférence de manière opposée l'une à l'autre au-dessus de la zone centrale.

6. Capteur calorimétrique selon l'une des revendications précédentes, **caractérisé en ce qu'**une structure de piste imbriquée (20) est présente, dans laquelle les pistes de résistance (2, 3), lorsque vues en vue de dessus, sont imbriquées les unes dans les autres de telle sorte que des boucles (2a) de la première piste de résistance (2) entourent des boucles (3a) de la seconde piste de résistance (3) et des boucles (3a) de la seconde piste de résistance (3) entourent des boucles (2a) de la première piste de résistance (2).

7. Capteur calorimétrique selon l'une des revendications précédentes, **caractérisé en ce que** la structure de piste (10 ; 20 ; 30) présente une symétrie de révolution au moins triple, de préférence au moins quadruple.

8. Capteur calorimétrique selon l'une des revendications précédentes, **caractérisé en ce que** la seconde piste de résistance (3) est guidée entre les branches de boucle (2a) de la revendication 2 ou entre les boucles qui l'entourent (2a) de la revendication 6 dans des boucles (3a).

9. Capteur calorimétrique selon l'une des revendications précédentes, **caractérisé en ce qu'**une distance subsiste respectivement entre des portions de piste voisines des pistes de résistance (2, 3), laquelle distance est plus petite qu'une épaisseur du substrat (1), de préférence inférieure à 50 µm.

10. Capteur calorimétrique selon l'une des revendications précédentes et présentant au moins l'une des caractéristiques suivantes :
(i) une céramique d'oxyde d'aluminium forme le substrat (1),
(ii) la piste de résistance (2) de la résistance de chauffage et la piste de résistance (3) de la résistance de mesure de température sont constituées du même matériau de résistance, par exemple du platine,
(iii) les pistes de résistance (2, 3) sont déposées sur le substrat (1) en utilisant la technique des couches épaisses ou, de préférence, la technique des couches minces,
(iv) la résistance de mesure de température (3) présente une valeur nominale de résistance plus élevée que la résistance de chauffage (2), de préférence plus élevée d'au moins un facteur 4 (quatre).

11. Capteur calorimétrique selon l'une des revendications précédentes, **caractérisé en ce que** la piste de résistance (2) de la résistance de chauffage et la piste de résistance (3) de la résistance de mesure de température s'étendent sur la même face du substrat (1).

12. Capteur calorimétrique selon l'une des revendications précédentes, **caractérisé en ce que** les boucles (2a, 2b, 3a ; 2a, 2b, 2c, 3a ; 2a, 3a) sont rectilignes ou composées de portions rectilignes de la première ou de la seconde piste de résistance (2, 3).

13. Capteur calorimétrique selon l'une des revendications précédentes, comportant de plus un capteur de référence de température (9) disposé à l'extérieur d'une zone active de la résistance de chauffage (2) et une commande ou une régulation reliée à la résistance de chauffage (2), à la résistance de mesure de température (3) et au capteur de référence de température (9), avec un courant correspondant au procédé de mesure sélectionné (CCA, CTA) pour l'alimentation de la résistance de chauffage (2).

14. Capteur calorimétrique selon l'une des revendications précédentes, comportant une structure de montage (11) pour le montage à un emplacement de mesure et un tube de protection (12) faisant saillie à partir de la structure de montage (11) et pouvant être plongé dans un milieu fluide (M) avec une extrémité axiale espacée de la structure de montage (11), extrémité sur laquelle le substrat (1) est disposé avec la structure de piste (10 ; 20 ; 30) opposée à la structure de montage (11).

15. Capteur calorimétrique selon l'une des revendications précédentes, **caractérisé en ce qu'**il est utilisé comme capteur (8) pour déterminer une ou plusieurs grandeurs parmi le groupe constitué d'un débit massique (dm/dt), d'un débit volumique, d'une vitesse d'écoulement (v), d'une capacité thermique et d'une conductibilité thermique d'un milieu fluide (M), dans lequel le capteur (8) peut en particulier être utilisé pour surveiller l'alimentation d'une machine ayant un milieu de refroidissement ou de graissage ou un autre milieu (M) qui s'écoule.
